# EUROPEAN PATENT SPECIFICATION

(11) **EP 2 447 844 B1**
(45) Date of publication and mention of the grant of the patent: **14.09.2022**
(21) Application number: 10090009.1
(22) Date of filing: 26.10.2010
(51) Int. Cl.: G06F 11/16

(54) **Validating a correct operation of a HMI**
Prüfung des korrekten HMI-Betriebs
Validation du fonctionnement correct d'un dispositif IHM

(43) Date of publication of application: 02.05.2012
(73) Proprietor: Bombardier Transportation GmbH, 10785 Berlin (DE)
(72) Inventor: Conan, Loïc, 59130 Lambersart (FR); De Coen, Luc, 9230 Wetteren (BE)
(74) Representative: Patentanwälte Bressel und Partner mbB

(56) References cited:
- EP-A2- 0 461 792
- EP-B1- 0 584 895
- DE-C1- 19 951 541
- US-A1- 2007 222 642

## Description

The invention relates to a method of validating a correct operation of a HMI, i.e. a human machine interface located in a driver control arrangement for controlling the operation of the rail vehicle in a rail vehicle. The invention also relates to a rail vehicle comprising a HMI located in a driver control arrangement for controlling the operation of the rail vehicle.

HMIs are often used to indicate safety related information. In particular during the operation of rail vehicles safety related information such as the velocity of the rail vehicle or the braking power of the braking system need to be displayed. If the displayed information is wrong or incomplete, or if the information is not displayed in a manner which can immediately be recognized by the driver, the safety of operation is not guaranteed.

In recent years, HMIs have been developed comprising digital screens for displaying visual information, and the invention particularly relates to this type of HMIs. Each matrix element of the screen can be controlled according to the corresponding pixel of an image to be displayed on the screen. A data processor of the HMI produces the image to be displayed. The image can directly be indicated by the display without further data processing. It is also possible that not all pixels of the image are calculated in each duty cycle of the data processor, but only these pixels which differ compared to a previous situation.

The data processor may fail for different reasons. The result is a set of indication data (in particular an image to be displayed) which does not correspond to the information to be displayed as received by the HMI. Therefore, a second processor may be provided to check if the indication data produced by the first processor is equivalent to the information to be indicated by the HMI. If the check result is negative, i.e. there is a difference, a predetermined process is immediately triggered, for example the HMI is re-started or the screen is set blank.

In order to prepare operation of such a HMI comprising two processors, the HMI should be validated for correct operation. It is possible to use a special purpose validation program performed by the first processor to create artefacts that shall be detected by the second processor (the safety processor in the following). Such a validation procedure can simulate hardware and/or software failures of the first processor (the main processor in the following) and can check their detection by the safety processor, but cannot detect failures of the standard program which is performed during normal operation by the main processor. It also cannot detect failures which only happen when this particular main processor performs the standard program. Furthermore, it cannot detect failures of the safety processor, including a corresponding program run by the safety processor, which only happen if the standard program is run by the main processor.

DE 199 51 541 C1 describes an integrated electronic module comprising a number of connections and further comprising two equally typed core circuits, which can be operated in a synchronous mode. Furthermore, the module comprises a comparison device to which the signals of outputs of the core circuits, which correspond to each other, are transmitted via test inputs for comparison with each other. There is a comparator output for outputting an error signal in case of lacking comparison of these signals. In particular, an application logic is provided double in form of two core circuits. Inputs of the module are connected to the inputs of the two core circuits, but only one set of one of the core circuits is connected to the outside via output connections of the module. The outputs of the other (secondary) core circuit only serve for checking the error-free operation by means of a comparison device. For example, an interruption of an output connection can be simulated with the aid of inputting an error signal. Outputs of the core circuits, which correspond to each other, are connected to checking inputs of comparison means for the purpose of comparing the checking inputs, namely of these outputs with each other.

US 2007 222 642 A1 describes a flat panel display system for an aircraft display including a graphics rendering computer for rendering of anti-aliased graphical imaging data derived from aircraft sensors for full-field imaging on a cockpit display screen. A comparator processor independently generates, from the same sensor data, a selected subset or "points of light" of the display screen image and compares the points of light data to the data generated by the rendering computer for the same display screen pixel locations. The minimized processing requirements and simplified design of the comparator processor enable ready FAA certification of the comparator processor, whereas the extreme complexity and processing operations required of the rendering computer make FAA certification thereof unusually time consuming and expensive. The comparator processor verifies a meaningful subset of the imaging data generated by the rendering computer for each display refresh scan and thereby obviates the need for the otherwise-required level of rendering computer certification that is impractical or unavailable. The rendering computer may be implemented by commercial single-board personal computer hardware with a replaceable graphics processor to enable ease of use of improved components.

It is an object of the present invention to provide a method of validating a correct operation of a HMI located in a driver control arrangement for controlling the operation of the rail vehicle in a rail vehicle, a rail vehicle comprising a HMI located in a driver control arrangement for controlling the operation of the rail vehicle, the HMI comprising a validation mode and a rail vehicle comprising the HMI, wherein the reliability of the validation is improved and the effort for performing the validation is reduced. The present invention is defined in the independent claims. Further aspects of the invention are outlined in the dependent claims.

It is proposed to modify the indication data, which can directly be indicated by the indication device of the HMI and which are produced by the main processor (the first processor) for the purpose of validating the correct operation of the HMI and to use the safety processor (the second processor) to check if the modified indication data is equivalent to the information to be indicated by the HMI. It is decided that the validation was successful, if the check result means that the modified indication data is not equivalent to the information to be indicated. It is an important feature of the present invention that - during validation - the same predetermined procedure (the first predetermined procedure in the following) for producing the indication data is performed by the first processor as during normal operation of the HMI. This means that the handling of the input data which are input to the HMI is not altered until the indication data which can directly be indicated are obtained. This means, for example, that the same program can be used for operating the first processor. There is therefore an additional modification function which acts on the indication data produced by the first processor. For normal operation, this additional modification function is disabled. Enabling and disabling the modification function can be performed by a signal received as input together with the input data or by configuration settings etc.

The same applies to the predetermined procedure which is performed by the safety processor (the second processor). During validation and during normal operation, the safety processor performs the same predetermined procedure (the second predetermined procedure in the following) for checking if the indication data is equivalent to the information to be indicated by the HMI. During validation mode, the indication data received and processed by the safety processor may be modified indication data or non-modified indication data. This means it can also be checked during validation, if the safety processor falsely detects differences between the indication data and the corresponding information to be indicated by the HMI. Of course, the check result of the safety processor that there is a difference can also mean that there is a failure of the main processor or of the first predetermined procedure.

The first predetermined procedure or the second predetermined procedure may be a program, for example implemented in software and/or hardware. For example, the validation mode according to the present invention only requires an additional program which controls the operation of the modification function and the operation of the decision making if the validation was successful or not.

The attached claims define the scope of protection. Claim 1 is directed to a method of validating a correct operation of a HMI located in a driver control arrangement for controlling the operation of the rail vehicle in a rail vehicle.

In particular, the modified indication data can be output after step c) also to an indication device, e.g. for display on a screen.

Claim 5 is directed to a rail vehicle comprising a HMI located in a driver control arrangement for controlling the operation of the rail vehicle.

There is a decision device adapted to decide that a validation of the HMI was successful if a check result of the second program means that the modified indication data is not equivalent to the information to be indicated.

The output of the first processor and the output of the modification device may be the same output. For example, the modification device may modify intermediate data which are processed to produce the indication data.

According to step f) of the claimed method and according to the function of the decision device it is decided that a validation of the HMI was not successful if the check result of step e) or of the second program means that the modified indication data is equivalent to the information to be indicated. In this case, the validation failed, because the modification was not detected by the safety processor (the second processor).

However, during normal operation, the operation of the HMI is also checked while the modification function is switched off. Therefore, it is proposed to perform steps a), b), wherein non-modified indication data obtained in step b) are input to the second processor and the non-modified indication data are checked instead of the modified indication data, and to decide that the validation was successful if the check result means that the indication data is equivalent to the information to be indicated. This corresponds to an embodiment of the HMI, wherein the HMI performs a further validation procedure during normal operation by performing the second program using the second processor in a manner in which the non-modified indication data produced by the first program are checked - instead of the modified indication data - for being equivalent to the information to be indicated by the HMI and in which the decision device decides that the validation was successful if the check result means that the indication data is equivalent to the information to be indicated.

This further validation procedure will detect any failure of the normal operation.

Preferably, steps a) to f) are repeated wherein the indication data are modified in step c) in a different manner. Correspondingly, the modification device of the HMI may be adapted to modify the indication data in a different manner during repeated validation of the HMI. Different modifications increase the reliability of the validation.

The main processor produces (by processing the input data according to the first predetermined procedure) the indication data. These indication data unambiguously define the way an indication device of the HMI has to indicate the information contained in the indication data. This means that the indication data can either directly be indicated by the indication device without further data processing (e.g. the indication data are a two-dimensional image to be displayed or a part, such as an rectangular area, of the image to be displayed) or there is a third predetermined procedure which defines how the indication data are to be processed to result in data which can directly be indicated by the indication device without further data processing (e.g. the indication data define the angle and/or position of a graphical element, such as an arrow, which corresponds to a measurement value to be indicated, for example a velocity of a rail vehicle).

As mentioned above, the first predetermined procedure and the second predetermined procedure are exactly the same predetermined procedures as being performed during normal operation of the HMI, when the indication data are not modified. This means the invention can also comprise the normal operation of the HMI. For example, the method starts with the validation and then, after successful validation, the normal operation of the HMI is performed using the first predetermined procedure and the second predetermined procedure. In particular, the normal operation is performed in the manner defined by claim 2, with the exception that the result is not a validation result but a result of the normal operation of the safety processor: it is decided that operation is failure-free if the check result of step f) means that the indication data is equivalent to the information to be indicated.

In case of a display device, the safety processor may perform the check if the modified indication data (or the non-modified indication data) are equivalent to the information to be indicated by the HMI for example in the following manner: It may calculate a characteristic value from the indication data or from a part of the indication data, wherein the part may correspond to a pre-determined display region where the information is to be displayed. For example, the pre-determined region may be a part of the display area where the velocity of a rail vehicle is to be displayed. In particular, the HMI may be part of the control desk of the rail vehicle. Then, the characteristic value is compared with an expected value which corresponds to the information to be displayed by the HMI. The characteristic value may be a so-called CRC value (cyclic redundancy check value). However, the only requirement for the characteristic value is that it can unambiguously be calculated and that the result of the calculation is reproducible. The resulting unique value represents the information which is displayed.

For example, the indication data can be stored in a display memory, i.e. a data storage of the display. Often, the display memory is a buffer which is automatically read out repeatedly in regular cycles to produce and refresh the image on a screen. However, as mentioned above, the indication data may also be data to be processed according to a third predetermined procedure to obtain the data which can be stored in the display memory.

Preferably, the first predetermined procedure is adapted to calculate from a plurality of information the information to be displayed. In particular, the plurality of information may comprise different measurement values of the same quantity, in particular physical quantity, like speed, rotational speed, distance, electric voltage, electric current. In contrast, the third predetermined procedure may just produce the corresponding presentation for indication (in particular for display).

Specific examples of the present invention will be described with reference to the attached figures:
- Fig. 1: an example of a control and display system in the control desk of a rail vehicle,
- Fig. 2: parts of an HMI comprising display areas and input means which are visible to the driver,
- Fig. 3: a schematic diagram showing functional blocks of a HMI comprising a main processor and a safety processor, wherein the modification function is not shown, i.e. the diagram corresponds to the normal operation of the HMI,
- Fig. 4: a schematic diagram of the HMI shown in Fig. 3 comprising the additional modification function.

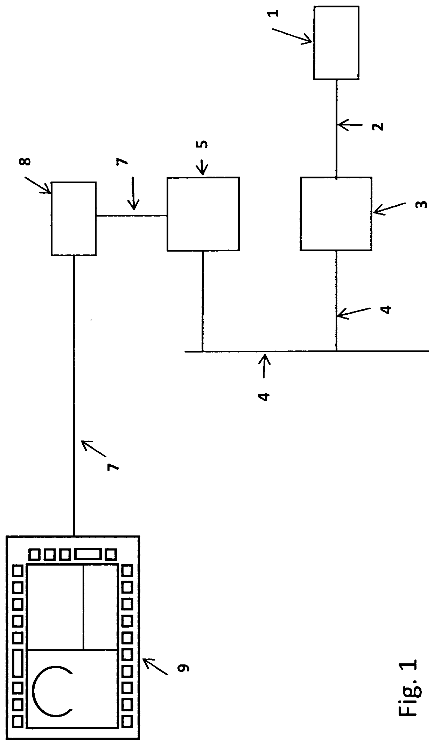

Fig. 1 shows an example of an arrangement in a rail vehicle. A signal source 1 is connected to a first computer 3 via a data transfer line 2. The signal source 1 is, for example, a speed sensor or a device for calculating a speed value from the measurement value of a speed sensor. The first computer 3 is connected to a data bus 4, for example a multi-functional vehicle bus (MVB) of the rail vehicle. A second computer 5 is connected to the data bus 4. The first computer transfers the measurement values continuously to the second computer via the data bus 4.

The second computer 5 is connected to the display device 9 via a further data transfer line 7, which may be an Ethernet data bus. A switch 8 may be part of the data transfer line 7, for routing the data to be transferred. The speed values which are received by the second computer 5 are transferred to the display device 9 via the data transfer line 7.

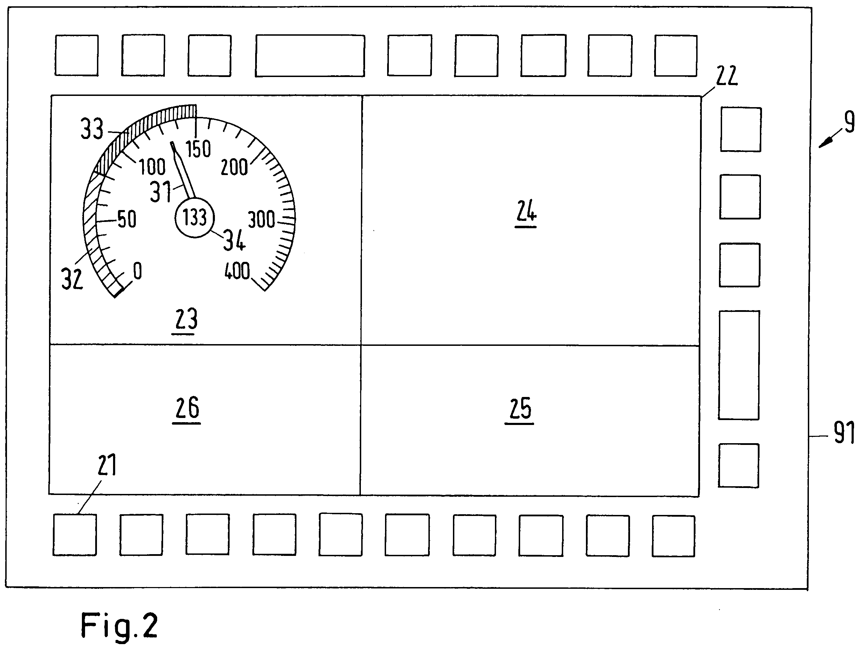

In Fig. 2, the rectangular frame 91 denotes the outline of the display device 9. Within the inner rectangular frame 22, information can be displayed to the vehicle driver. For example, this display area 22 may be a LCD display, a OLED (organic light emitting diode) display or a TFT display. The display area 22 is divided into four regions 23, 24, 25 and 26. In the region 23, the speed of the vehicle is displayed. Region 24 may display monitoring information for monitoring the state of technical devices of the vehicle, region 25 may display supplementary driving information to the driver and region 26 may display responses of the vehicle control system to input made by the driver.

Within the outline 91 of the display device 9, but outside of the display area 22, rectangular blocks are shown, one of which is denoted by reference numeral 21. These areas may be touched by the driver and corresponding input signals or input data is produced. For example, the ten quadratic areas under the display area 22 may correspond to the numerals 0 to 9. Other touch sensitive areas may correspond to specific functions, such as increase or decrease illumination intensity of the display or display background.

Within pre-determined region 23, three different types of speed related information are displayed. First, the speed in km/h is indicated as a number (here "133") within a circular line in the centre 34 of display region 23. Second, a pointer 31 or "needle" is displayed which points to the value "133" on the circular scale having the range from "0" to "400". Third, a circular line or bar is extending from "0" of the scale to "150" of the scale. The colour of the bar changes at the value "80" of the scale. The bar segment from "0" to "80" is denoted by 32 and the bar segment from "80" to "150" is denoted by 33. The region from "80" to "150" indicates to the driver that the speed should be in this speed region, i.e. should be not smaller than 80 km/h and should be not greater than 150 km/h.

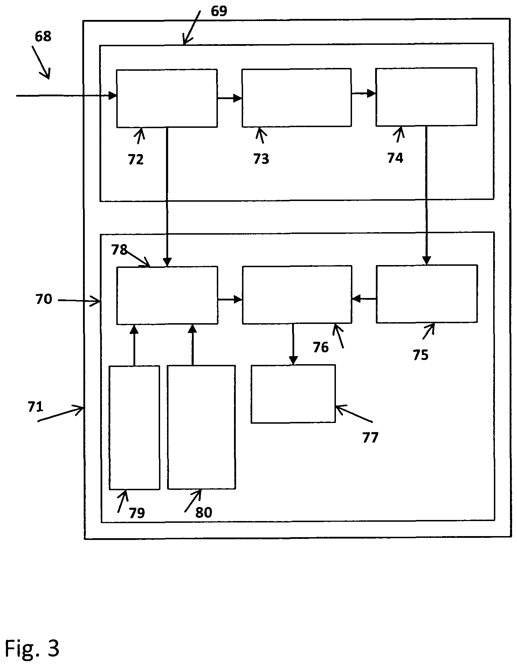

Fig. 3 shows a HMI 71. In the following, several "functions" are mentioned. These functions may be realised by computer software and/or hardware, for example. Also "communication devices" are mentioned. At least some of the functions of the communication devices may also be realised by computer software and/or hardware.

Input data to the HMI 71 are transferred via transfer line 68, which is adapted for safe communication, to a corresponding communication device 72 of HMI 71. The communication device 72 may receive different measurement values of the same quantity (e.g. the velocity, i.e. speed of a rail vehicle) from different sources, not shown in Fig. 3. For example, the digital speed value "133" in the centre 34 of display region 23 in Fig. 2 may stem from a different speed sensor than the speed value indicated by the needle 31. In practice, there are often more speed sensors than values to be displayed. Some of the measured speed values may differ from others, although the vehicle is actually driving at only one speed. One reason for this is the tolerance of measurement, another reason is that some wheels are subject to traction and braking and - therefore - the rotation of the wheel does not correspond to the actual speed of the vehicle. A third reason may be a failure of a speed sensor.

The communication device 72 of HMI 71 is part of a main processor 69. The plurality of speed signals which is received by the communication device 72 is transferred to a data processing function 73 (which corresponds to a first predetermined process) which processes the speed signals in order to produce one or more than one speed values to be displayed. This one speed value or these more than one speed values may be the indication data to be displayed.

Alternatively, data processing function 73 may also produce the image data to be displayed, which correspond to the speed value(s). In this case, the image data are the indication data. The production of the image data is performed according to the third predetermined procedure, which means that the same speed value(s) to be displayed results in the same image data, as long as the third predetermined procedure is always performed in the same manner. Since the third predetermined procedure is usually part of the HMI and has been performed many times for different types of applications, it can be expected that the procedure is performed free of failure. However, this does not apply to the calculation of the speed value(s) to be displayed (first predetermined procedure). This is a function which is designed for a specific application and requires validation. Nevertheless the invention allows encompassing failures of both the first and third predetermined procedure.

Visualization function 74 receives the output of data processing function 73. Visualization function 74 is controlling the display according to the output of data processing function 73 to produce a picture which corresponds to the indication data produced by data processing function 73. If data processing function 73 outputs speed value(s) to be indicated, the third predetermined procedure is performed by visualization function 74.

The example described before relates to the display of speed values. However, the corresponding problem and solution may apply to other applications, such as the display of temperature values or of the braking power of the braking system of a rail vehicle.

HMI 71 also comprises a safety processor 70 which also receives the input data which is received by communication device 72 and is output to data processing function 73. The receiving device (preferably adapted to perform failure-safe receiving of data) of safety processor 70 is denoted by 78. Therefore, safety processor 70 receives the information to be displayed and can use this information in order to check the correct operation of the display of HMI 71. Blocks 79 and 80 represent functions which contribute to the safe signal transfer to safety processor 70.

Function 75 of safety processor 70 receives an output signal of display control function 74 in order to obtain information of the actual display content and/or to obtain data corresponding to the actually displayed picture. Therefore, the operation of the complete main processor (including the data processing function 73) can be checked by safety processor 70. The checking function 76 of safety processor 70 performs the check according to a second predetermined procedure. The result of the check is output to decision device 77 which triggers a predetermined fall-back procedure (such as switching off the screen or re-starting the HMI) if the check results indicate that the information to be displayed does not correspond to the actual display content. Therefore, the function of the decision device also includes making the decision that a validation of the HMI 71 was successful if a check result of the checking function 76 means that the modified indication data is not equivalent to the information to be indicated.

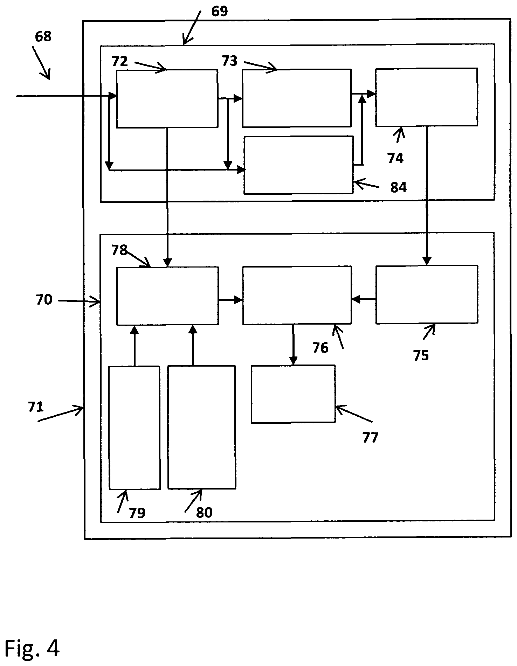

Fig 4 is similar to Fig. 3. The same numerals in Fig. 3 and 4 denote the same functional blocks and devices.

Main processor 69 comprises compared to Fig. 3 an additional function, namely the modification function 84. The input data which are received by the communication device 72 are output to the modification function 84. Alternatively or in addition, the modification function may receive the output of data processing function as input signal. In any case, modification function 84 modifies the output of data processing function 73. If the third predetermined procedure is performed by the visualization function 74, modification function 84 may receive the output signal of visualization function 74 and may modify this output signal directly.

In any case, the output signal of visualization function 74 is modified compared to the case in which the modification function 84 is disabled. Therefore, the output signal of visualization function 74 which is output to function 75 of safety processor 70 should not correspond to the information to be displayed. The checking function 76 should detect this difference and should output a corresponding check result to decision device 77. Therefore, if checking function 76 does not output the check result that there is a difference, decision device 77 decides that the validation has failed.

This process can be repeated with different type of modifications performed by the modification function 84. For example, modification function 84 may produce a second needle similar to the needle 31 shown in Fig. 2. Such a second needle is not acceptable during operation of the vehicle, since the driver can be confused. Another possible failure may be that regions of the display remain dark or display the background colour instead of the information to be displayed. A possible reason for that may be that data processing function 73 output the wrong information, in particular the wrong measurement value (for example zero instead of one hundred). The modification function 84 may simulate this failure by erasing the needle 31 of Fig. 2 or by raising parts of the needle 31.

The output of display control function 74 may directly be output to the display (not shown in Fig. 3 and 4) of the HMI 71.

## Claims

1. A method of validating a correct operation of a HMI (71), i.e. a human machine interface, located in a driver control arrangement for controlling the operation of the rail vehicle in a rail vehicle, the method comprising the following steps:
a) receiving input data comprising information about the velocity of the rail vehicle to be indicated by the HMI (71) and supplying the input data to a first processor (69) of the HMI (71), and
b) processing (73) the input data using the first processor (69) according to a first predetermined procedure for producing indication data which define the way an indication device of the HMI (71) has to indicate the information about the velocity of the rail vehicle,
c) modifying (84) the indication data and obtaining - in a validation mode while a corresponding modification function is enabled - modified indication data to allow for validation of the correct operation of the HMI (71),
d) inputting the input data to a second processor (70) and inputting - in the validation mode - the modified indication data to the second processor (70),
e) processing (76) in the validation mode the modified indication data according to a second predetermined procedure for checking if the modified indication data are equivalent to the information about the velocity of the rail vehicle to be indicated by the HMI (71) according to the input data received at the data input and outputting a corresponding check result,
f) deciding (77) in the validation mode that the validation was successful if the check result of step e) means that the modified indication data is not equivalent to the information about the velocity of the rail vehicle to be indicated and triggering a predetermined fall-back procedure if the validation was not successful,
wherein the first predetermined procedure and the second predetermined procedure are exactly the same predetermined procedures in the validation mode as being performed during normal operation of the HMI (71), when the indication data are not modified.

2. The method of claim 1, wherein, during normal operation, a further validation procedure is performed by performing steps a), b), wherein non-modified indication data obtained in step b) are input to the second processor (70) and the non-modified indication data are checked instead of the modified indication data, and by deciding that the validation was successful if the check result means that the indication data is equivalent to the information about the velocity of the rail vehicle to be indicated.

3. The method of claim 1 or 2, wherein steps a) to f) of claim 1 are repeated and wherein the indication data are modified in step c) in a different manner.

4. The method of one of claims 1 to 3, wherein step c) is performed using the first processor (69).

5. A rail vehicle comprising a HMI (71), i.e. a human machine interface, located in a driver control arrangement for controlling the operation of the rail vehicle, wherein the HMI (71) comprises a display as an indication device (9) and wherein the HMI (71) comprises the following:
- a data input (68) for receiving input data comprising information about the velocity of the rail vehicle to be indicated by the HMI (71),
- the indication device (9) being adapted to indicate the information to a human,
- a first processor (69) which is connected to the data input (68) for receiving the input data,
- a first program (73) implementing a first predetermined procedure for producing indication data which define the way an indication device of the HMI (71) has to indicate the information about the velocity of the rail vehicle, wherein the first processor (69) is adapted to perform the first program (73),
- a modification device (84) adapted to modify the indication data for obtaining modified indication data, thereby implementing a modification function, to allow for validation of the correct operation of the HMI (71), wherein the modification function is disabled during normal operation, but is enabled in a validation mode of the HMI (71),
- a second processor (70), which is also connected to the data input (68) for receiving the input data and which is connected to an output of the first processor (69), for receiving the modified indication data in the validation mode, or to an output of the modification device (84), for receiving the modified indication data in the validation mode,
- a second program (76) implementing a second predetermined procedure for checking in the validation mode if the modified indication data is equivalent to the information about the velocity of the rail vehicle to be indicated by the HMI (71) according to the input data received at the data input and for outputting a corresponding check result, wherein the second processor (70) is adapted to perform the second program (76),
- a decision device (77) adapted to decide in the validation mode that the validation was successful if the check result means that the modified indication data is not equivalent to the information about the velocity of the rail vehicle to be indicated and adapted to trigger a predetermined fall-back procedure if the validation was not successful,
wherein the first predetermined procedure and the second predetermined procedure are exactly the same predetermined procedures in the validation mode as being performed during normal operation of the HMI (71), when the indication data are not modified.

6. The rail vehicle of claim 5, wherein the HMI (71) - during normal operation - is adapted to perform a further validation procedure by performing the second program (76) using the second processor (70) in a manner in which the non-modified indication data produced by the first program (73) and optionally by a third predetermined procedure are checked - instead of the modified indication data - for being equivalent to the information about the velocity of the rail vehicle to be indicated by the HMI (71) and in which the decision device (77) decides that the validation was successful if the check result means that the indication data is equivalent to the information about the velocity of the rail vehicle to be indicated.

7. The rail vehicle of claim 5 or 6, wherein the modification device (84) is adapted to modify the indication data in a different manner during repeated validation of the HMI (71).

8. The rail vehicle of one of claims 5 to 7, wherein the modification device (84) is part of or implemented by the first processor (69).

## Patentansprüche

1. Verfahren zum Validieren eines korrekten Betriebs einer HMI (71), d.h. einer Mensch-Maschine-Schnittstelle, die sich in einer Fahrer-Steueranordnung zum Steuern des Betriebs des Schienenfahrzeugs in einem Schienenfahrzeug befindet, wobei das Verfahren die folgenden Schritte umfasst:
(a) Empfangen von Eingangsdaten, die Informationen über die Geschwindigkeit des Schienenfahrzeugs umfassen, die von der HMI (71) anzuzeigen sind, und Liefern der Eingangsdaten an einen ersten Prozessor (69) der HMI (71), und
(b) Verarbeiten (73) der Eingangsdaten unter Verwendung des ersten Prozessors (69) gemäß einer ersten vorgegebenen Verfahrensweise, um Anzeigedaten zu produzieren, welche die Art definieren, wie eine Anzeigevorrichtung der HMI (71) die Informationen über die Geschwindigkeit des Schienenfahrzeugs anzuzeigen hat,
(c) Modifizieren (84) der Anzeigedaten und - in einem Validierungsmodus, während eine entsprechende Modifikationsfunktion eingeschaltet ist - Erhalten von modifizierten Anzeigedaten, um eine Validierung des korrekten Betriebs der HMI (71) zu ermöglichen,
(d) Eingeben der Eingangsdaten in einen zweiten Prozessor (70) und - in dem Validierungsmodus - Eingeben der modifizierten Anzeigedaten in den zweiten Prozessor (70),
(e) Verarbeiten (76) der modifizierten Anzeigedaten im Validierungsmodus gemäß einer zweiten vorgegebenen Verfahrensweise, um zu überprüfen, ob die modifizierten Anzeigedaten den von der HMI (71) anzuzeigenden Informationen über die Geschwindigkeit des Schienenfahrzeugs gemäß den Eingangsdaten, die am Dateneingang empfangen wurden, äquivalent sind, und Ausgeben eines entsprechenden Überprüfungsergebnisses,
(f) Entscheiden (77), im Validierungsmodus, dass die Validierung erfolgreich war, wenn das Überprüfungsergebnis von Schritt e) bedeutet, dass die modifizierten Anzeigedaten den anzuzeigenden Informationen über die Geschwindigkeit des Schienenfahrzeugs nicht äquivalent sind, und Auslösen einer vorgegebenen Rückfall-Verfahrensweise, wenn die Validierung nicht erfolgreich war,
wobei die erste vorgegebene Verfahrensweise und die zweite vorgegebene Verfahrensweise im Validierungsmodus exakt gleiche vorgegebene Verfahrensweisen sind, wie sie während eines normalen Betriebs der HMI (71) durchgeführt werden, wenn die Anzeigedaten nicht modifiziert sind.

2. Verfahren nach Anspruch 1, wobei während eines normalen Betriebs eine weitere Validierungsverfahrensweise durchgeführt wird durch Durchführen der Schritte a), b), wobei nicht-modifizierte Anzeigedaten, die in Schritt b) erhalten werden, in den zweiten Prozessor (70) eingegeben werden und die nicht-modifizierten Anzeigedaten anstelle der modifizierten Anzeigedaten überprüft werden, und durch Entscheiden, dass die Validierung erfolgreich war, wenn das Überprüfungsergebnis bedeutet, dass die Anzeigedaten den anzuzeigenden Informationen über die Geschwindigkeit des Schienenfahrzeugs äquivalent sind.

3. Verfahren nach den Ansprüchen 1 oder 2, wobei die Schritte a) bis f) von Anspruch 1 wiederholt werden, und wobei die Anzeigedaten in Schritt c) auf andere Weise modifiziert werden.

4. Verfahren nach einem der Ansprüche 1 bis 3, wobei Schritt c) unter Verwendung des ersten Prozessors (69) durchgeführt wird.

5. Schienenfahrzeug, eine HMI (71), d.h. eine Mensch-Maschine-Schnittstelle, umfassend, die sich in einer Fahrer-Steueranordnung zum Steuern des Betriebs des Schienenfahrzeugs befindet, wobei die HMI (71) ein Display als Anzeigevorrichtung (9) umfasst, und wobei die HMI (71) Folgendes umfasst:
- einen Dateneingang (68) zum Empfangen von Eingangsdaten, die Informationen über die Geschwindigkeit des Schienenfahrzeugs umfassen, die von der HMI (71) anzuzeigen sind,
- die Anzeigevorrichtung (9), die eingerichtet ist, die Informationen einem Menschen anzuzeigen,
- einen ersten Prozessor (69), der mit dem Dateneingang (68) verbunden ist, um die Eingangsdaten zu empfangen,
- ein erstes Programm (73), das eine erste vorgegebene Verfahrensweise implementiert, um Anzeigedaten zu produzieren, welche die Art definieren, wie eine Anzeigevorrichtung der HMI (71) die Informationen über die Geschwindigkeit des Schienenfahrzeugs anzuzeigen hat, wobei der erste Prozessor (69) eingerichtet ist, das erste Programm (73) durchzuführen,
- eine Modifikationsvorrichtung (84), die eingerichtet ist, die Anzeigedaten zu modifizieren, um modifizierte Anzeigedaten zu erhalten, wodurch eine Modifikationsfunktion implementiert wird, um eine Validierung des korrekten Betriebs der HMI (71) zu ermöglichen, wobei die Modifikationsfunktion während eines normalen Betriebs ausgeschaltet ist, aber in einem Validierungsmodus der HMI (71) eingeschaltet ist,
- einen zweiten Prozessor (70), der ebenfalls mit dem Dateneingang (68) verbunden ist, um die Eingangsdaten zu empfangen, und der verbunden ist mit einer Ausgabe des ersten Prozessors (69), um im Validierungsmodus die modifizierten Anzeigedaten zu empfangen, oder mit einer Ausgabe der Modifikationsvorrichtung (84), um im Validierungsmodus die modifizierten Anzeigedaten zu empfangen,
- ein zweites Programm (76), das eine zweite vorgegebene Verfahrensweise implementiert, um im Validierungsmodus zu überprüfen, ob die modifizierten Anzeigedaten den von der HMI (71) anzuzeigenden Informationen über die Geschwindigkeit des Schienenfahrzeugs gemäß den am Dateneingang empfangenen Eingangsdaten äquivalent sind, und um ein entsprechendes Überprüfungsergebnis auszugeben, wobei der zweite Prozessor (70) eingerichtet ist, das zweite Programm (76) durchzuführen,
- eine Entscheidungsvorrichtung (77), die eingerichtet ist, im Validierungsmodus zu entscheiden, dass die Validierung erfolgreich war, wenn das Überprüfungsergebnis bedeutet, dass die modifizierten Anzeigedaten den anzuzeigenden Informationen über die Geschwindigkeit des Schienenfahrzeugs nicht äquivalent sind, und die eingerichtet ist, eine vorgegebene Rückfall-Verfahrensweise auszulösen, wenn die Validierung nicht erfolgreich war,
wobei die erste vorgegebene Verfahrensweise und die zweite vorgegebene Verfahrensweise im Validierungsmodus exakt gleiche vorgegebene Verfahrensweisen sind, wie sie während eines normalen Betriebs der HMI (71) durchgeführt werden, wenn die Anzeigedaten nicht modifiziert sind.

6. Schienenfahrzeug nach Anspruch 5, wobei die HMI (71) - während eines normalen Betriebs - eingerichtet ist, eine weitere Validierungsverfahrensweise durchzuführen durch Durchführen des zweiten Programms (76) unter Verwendung des zweiten Prozessors (70) auf solche Weise, dass die nicht-modifizierten Anzeigedaten, die von dem ersten Programm (73) und optional durch eine dritte vorgegebene Verfahrensweise produziert wurden - anstelle der modifizierten Anzeigedaten -, daraufhin überprüft werden, ob sie den von der HMI (71) anzuzeigenden Informationen über die Geschwindigkeit des Schienenfahrzeugs äquivalent sind, und dass die Entscheidungsvorrichtung (77) entscheidet, dass die Validierung erfolgreich war, wenn das Überprüfungsergebnis bedeutet, dass die Anzeigedaten den anzuzeigenden Informationen über die Geschwindigkeit des Schienenfahrzeugs äquivalent sind.

7. Schienenfahrzeug nach Anspruch 5 oder 6, wobei die Modifikationsvorrichtung (84) eingerichtet ist, die Anzeigedaten während einer wiederholten Validierung der HMI (71) auf andere Weise zu modifizieren.

8. Schienenfahrzeug nach einem der Ansprüche 5 bis 7, wobei die Modifikationsvorrichtung (84) Teil des ersten Prozessors (69) ist oder von diesem implementiert wird.

## Revendications

1. Procédé de validation d'un fonctionnement correct d'une HMI (71), c'est-à-dire une interface homme-machine, située dans un agencement de commande par le conducteur pour commander le fonctionnement du véhicule ferroviaire dans un véhicule ferroviaire, le procédé comprenant les étapes suivantes :
a) la réception de données d'entrée comprenant des informations concernant la vitesse du véhicule ferroviaire devant être indiquées par la HMI (71) et la fourniture des données d'entrée à un premier processeur (69) de la HMI (71), et
b) le traitement (73) des données d'entrée en utilisant le premier processeur (69) conformément à une première procédure prédéterminée pour produire des données d'indication qui définissent la façon dont un dispositif d'indication de la HMI (71) doit indiquer les informations concernant la vitesse du véhicule ferroviaire,
c) la modification (84) des données d'indication et l'obtention - dans un mode de validation tandis qu'une fonction de modification correspondante est activée - de données d'indication modifiées pour permettre une validation du fonctionnement correct de la HMI (71),
d) l'entrée des données d'entrée dans un second processeur (70) et l'entrée - dans le mode de validation - des données d'indication modifiées dans le second processeur (70),
e) le traitement (76) dans le mode de validation des données d'indication modifiées conformément à une deuxième procédure prédéterminée pour vérifier si les données d'indication modifiées sont équivalentes aux informations concernant la vitesse du véhicule ferroviaire devant être indiquées par la HMI (71) conformément aux données d'entrée reçues à l'entrée de données et la sortie d'un résultat de vérification correspondant,
f) le fait de décider (77) dans le mode de validation que la validation était réussie si le résultat de vérification de l'étape e) signifie que les données d'indication modifiées ne sont pas équivalentes aux informations concernant la vitesse du véhicule ferroviaire devant être indiquées et le déclenchement d'une procédure de secours prédéterminée si la validation n'était pas réussie,
dans lequel la première procédure prédéterminée et la deuxième procédure prédéterminée sont exactement les mêmes procédures prédéterminées dans le mode de validation que lorsqu'elles sont exécutées durant un fonctionnement normal de la HMI (71), lorsque les données d'indication ne sont pas modifiées.

2. Procédé selon la revendication 1, dans lequel, durant un fonctionnement normal, une procédure de validation supplémentaire est exécutée en exécutant les étapes a), b), dans lequel des données d'indication non modifiées obtenues à l'étape b) sont entrées dans le second processeur (70) et les données d'indication non modifiées sont vérifiées à la place des données d'indication modifiées, et en décidant que la validation était réussie si le résultat de vérification signifie que les données d'indication sont équivalentes aux informations concernant la vitesse du véhicule ferroviaire devant être indiquées.

3. Procédé selon la revendication 1 ou 2, dans lequel les étapes a) à f) selon la revendication 1 sont répétées et dans lequel les données d'indication sont modifiées à l'étape c) d'une manière différente.

4. Procédé selon l'une des revendications 1 à 3, dans lequel l'étape c) est exécutée en utilisant le premier processeur (69).

5. Véhicule ferroviaire comprenant une HMI (71), c'est-à-dire une interface homme-machine, située dans un agencement de commande par le conducteur pour commander le fonctionnement du véhicule ferroviaire, dans lequel la HMI (71) comprend un écran en tant que dispositif d'indication (9) et dans lequel la HMI (71) comprend ce qui suit :
- une entrée de données (68) pour recevoir des données d'entrée comprenant des informations concernant la vitesse du véhicule ferroviaire devant être indiquées par la HMI (71),
- le dispositif d'indication (9) étant adapté pour indiquer les informations à un humain,
- un premier processeur (69) qui est connecté à l'entrée de données (68) pour recevoir les données d'entrée,
- un premier programme (73) mettant en œuvre une première procédure prédéterminée pour produire des données d'indication qui définissent la façon dont un dispositif d'indication de la HMI (71) doit indiquer les informations concernant la vitesse du véhicule ferroviaire, dans lequel le premier processeur (69) est adapté pour exécuter le premier programme (73),
- un dispositif de modification (84) adapté pour modifier les données d'indication pour obtenir des données d'indication modifiées, mettant ainsi en œuvre une fonction de modification, pour permettre une validation du fonctionnement correct de la HMI (71), dans lequel la fonction de modification est désactivée durant un fonctionnement normal, mais est activée dans un mode de validation de la HMI (71),
- un second processeur (70), qui est également connecté à l'entrée de données (68) pour recevoir les données d'entrée et qui est connecté à une sortie du premier processeur (69), pour recevoir les données d'indication modifiées dans le mode de validation, ou à une sortie du dispositif de modification (84), pour recevoir les données d'indication modifiées dans le mode de validation,
- un second programme (76) mettant en œuvre une deuxième procédure prédéterminée pour vérifier dans le mode de validation si les données d'indication modifiées sont équivalentes aux informations concernant la vitesse du véhicule ferroviaire devant être indiquées par la HMI (71) conformément aux données d'entrée reçues à l'entrée de données et pour sortir un résultat de vérification correspondant, dans lequel le second processeur (70) est adapté pour exécuter le second programme (76),
- un dispositif de décision (77) adapté pour décider dans le mode de validation que la validation était réussie si le résultat de vérification signifie que les données d'indication modifiées ne sont pas équivalentes aux informations concernant la vitesse du véhicule ferroviaire devant être indiquées et adapté pour déclencher une procédure de secours prédéterminée si la validation n'était pas réussie,
dans lequel la première procédure prédéterminée et la deuxième procédure prédéterminée sont exactement les mêmes procédures prédéterminées dans le mode de validation que lorsqu'elles sont exécutées durant un fonctionnement normal de la HMI (71), lorsque les données d'indication ne sont pas modifiées.

6. Véhicule ferroviaire selon la revendication 5, dans lequel la HMI (71) - durant un fonctionnement normal - est adaptée pour exécuter une procédure de validation supplémentaire en exécutant le second programme (76) en utilisant le second processeur (70) d'une manière dans laquelle les données d'indication non modifiées produites par le premier programme (73) et optionnellement par une troisième procédure prédéterminée sont vérifiées - à la place des données d'indication modifiées - pour être équivalentes aux informations concernant la vitesse du véhicule ferroviaire devant être indiquées par la HMI (71) et dans laquelle le dispositif de décision (77) décide que la validation était réussie si le résultat de vérification signifie que les données d'indication sont équivalentes aux informations concernant la vitesse du véhicule ferroviaire devant être indiquées.

7. Véhicule ferroviaire selon la revendication 5 ou 6, dans lequel le dispositif de modification (84) est adapté pour modifier les données d'indication d'une manière différente durant une validation répétée de la HMI (71).

8. Véhicule ferroviaire selon l'une des revendications 5 à 7, dans lequel le dispositif de modification (84) fait partie du ou est mis en œuvre par le premier processeur (69) .
